# EUROPÄISCHE PATENTSCHRIFT

(11) **EP 1 316 742 B1**
(45) Veröffentlichungstag und Bekanntmachung des Hinweises auf die Patenterteilung: **25.01.2012**
(21) Anmeldenummer: 02024069.3
(22) Anmeldetag: 29.10.2002
(51) Int. Cl.: F16H 7/12

(54) **Ketten- oder Riemenspanner**
Chain or belt tensioner
Tendeur de courroie ou de chaîne

(30) Priorität: 30.11.2001 DE 10158653
(43) Veröffentlichungstag der Anmeldung: 04.06.2003
(73) Patentinhaber: Schulte, Reinhold, 33106 Paderborn (DE)
(72) Erfinder: Schulte, Reinhold, 33106 Paderborn (DE)
(74) Vertreter: Rehberg Hüppe + Partner

(56) Entgegenhaltungen:
- DE-A1- 4 242 292
- DE-A1- 10 014 701
- DE-C1- 4 423 813
- DE-U1- 8 807 869
- DE-U1- 20 005 224

## Beschreibung

Die Erfindung betrifft einen Ketten- oder Riemenspanner gemäß dem Oberbegriff des Anspruchs 1.

Derartige Kettenspanner sind bekannt. Kettenspanner mit elastischer Vorspannung einer Spannrolle haben den Vorteil, daß sie zumindest über einen relativ weiten Bereich selbstnachstellend sind.

Bei Ketten oder Riemen, die gelegentlichen Stoßbelastungen ausgesetzt sind, erweisen sich die elastischen Spannmechanismen jedoch in der Regel als zu weich. Insbesondere bei hin- und hergehend beweglichen Endlosketten können bei einer der beiden Bewegungsrichtungen Stoßbelastungen auftreten.

Aus DE 4423813C1 ist ein gattungsgemäßer Kettenspanner bekannt, der sich aus einer kombination eines Luftzylinders und eines Hydraulikzylinders zusammensetzt.

Der Erfindung liegt die Aufgabe zugrunde, einen kompakten Kettenspanner zu schaffen, der ein elastisches Vorspannen einer Kette ermöglicht, zugleich aber gewährleistet, daß die Spannrolle bei Stoßbelastungen zuverlässig abgestützt wird.

Diese Aufgabe wird erfindungsgemäß von einem Ketten- oder Riemenspanner gemäß Anspruch 1 gelöst. Die Spannrolle ist parallel zu dem elastischen Spannmechanismus durch einen Bremsmechanismus abgestützt, der die Bewegung der Spannrolle bremst bzw. auf eine vorgegebene Höchstgeschwindigkeit begrenzt.

Der Spannmechanismus umfasst einen Luftzylinder. Da Luft komprimierbar ist, eignet sie sich gut als Spannmedium. Der Bremsmechanismus umfaßt auch einen Hydraulikzylinder mit einer Drosselbohrung im Kolben. Die Drosselbohrung läßt nur einen sehr langsamen Übergang des Hydrauliköls von einer Kammer zur anderen zu, so daß dem Kolben und dessen Kolbenstange eine sehr langsame Bewegung aufgezwungen wird. Durch den Spannmechanismus wird daher kontinuierlich eine elastische Vorspannkraft aufgebracht, während die Spannbewegung oder auch die Einfeder-Bewegung durch den parallelgeschalteten Hydraulikzylinder auf eine vorgegebene Höchstgeschwindigkeit gebremst wird.

Der Hydraulikzylinder und der Luftzylinder sind hintereinander angeordnet. Sie weisen eine gemeinsame, beide Zylinder durchlaufende Kolbenstange auf, deren auf einer Seite austretendes Ende mit einem Schwenkarm der Spannrolle verbunden sein kann.

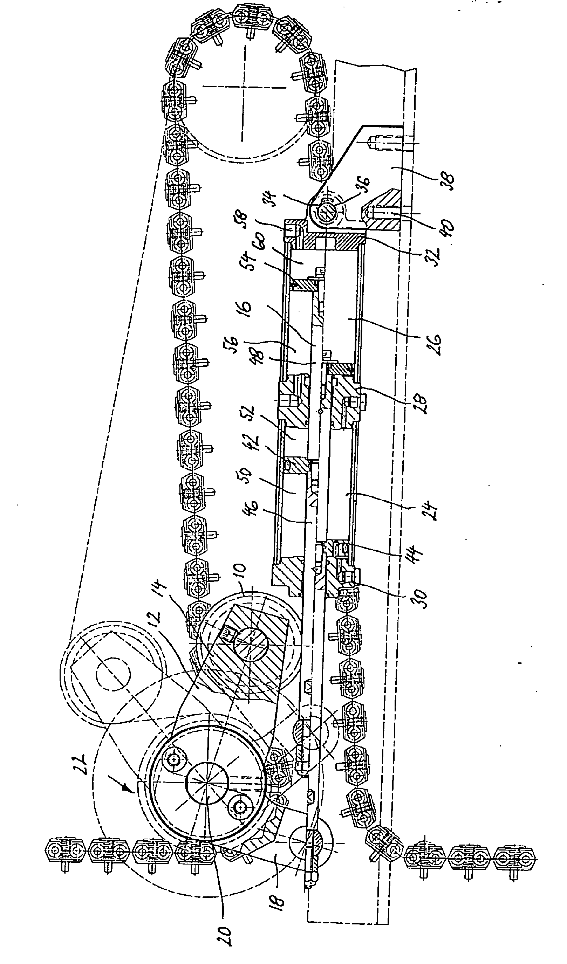

Im folgenden werden bevorzugte Ausführungsbeispiele anhand der beigefügten Zeichnung näher erläutert.

Die einzige Figur zeigt einen Ausschnitt eines Kettentriebes in Verbindung mit einem erfindungsgemäßen Ketten- oder Riemenspanner.

Die beweglichen Teile des Kettenspanners sind in zwei unterschiedlichen Positionen gezeigt. Eine Spannrolle 10, die an einem Schwenkarm 12 eines Kniehebels 14 drehbar gelagert ist, ist in der Zeichnung einmal in durchgezogenen Linien und einmal gestrichelt dargestellt. Die beiden Stellungen entsprechen zwei verschiedenen Axialstellungen einer Kolbenstange 16, deren links in der Zeichnung liegendes Ende mit dem anderen Schwenkarm 18 des Kniehebels 14 verbunden ist. Der Kniehebel 14 ist auf einer senkrecht zur Zeichenebene stehenden Achse 20 schwenkbar gelagert. Die Kette und damit die Spannrolle 10 liegen hinter der Zeichenebene, während die Mittelachse der Kolbenstange 16 in der Zeichenebene liegt.

Auf der Achse 20 des Kniehebels 14 liegt hinter diesem eine nicht im einzelnen dargestellte Umlenkrolle 22 für die Kette.

Die Kolbenstange 16 erstreckt sich nach rechts in der Zeichnung durch zwei aufeinanderfolgende Zylinder 24, 26, nämlich einen Hydraulikzylinder 24 und einen Pneumatikzylinder 26. Zwischen den beiden Zylindern 24, 26 befindet sich eine Trennwand 28, die von der Kolbenstange 16 durchlaufen wird. Der Hydraulikzylinder 24 ist auf der linken Seite durch einen Deckel 30 verschlossen, der ebenfalls einen Durchlaß für die Kolbenstange 16 aufweist. Der Pneumatikzylinder 26 ist auf der rechten Seite durch einen Deckel 32 verschlossen, der mit Hilfe eines an den Deckel angeformten Auges 34 schwenkbar auf einer Achse 36 angeordnet ist, die in einer nicht bezeichneten Bohrung eines Beschlagteils 38 liegt. Dieses Beschlagteil 38 ist mit Hilfe von Schrauben 40 auf einem nicht näher dargestellten Gestell befestigt. Es besteht die Möglichkeit, daß die Position des Beschlagteils 38 auf dem Gestell durch Umsetzen der Schrauben 40 in Langlöcher verstellbar ist.

Innerhalb des Hydraulikzylinders 24 ist auf der Kolbenstange 16 ein Kolben 42 befestigt, in dem sich eine Drosselbohrung 44 befindet. Es soll noch einmal darauf hingewiesen werden, daß die Kolbenstange und auch der Kolben 42 in zwei versetzten Positionen dargestellt sind. Die Kolbenstange ist aus einem linken Stangenabschnitt 46 und einem rechten Stangenabschnitt 48 zusammengesetzt, und der Kolben 42 ist zwischen die beiden zusammengeschraubten Stangenabschnitten eingespannt und damit in Längsrichtung fixiert.

Links und rechts des Kolbens 42 befinden sich Hydraulikkammern 50, 52, die mit Hydrauliköl gefüllt sind. Da das Hydrauliköl durch die Drosselbohrung 44 nur sehr langsam von einer Kammer in die andere übertreten kann, wird durch den Hydraulikzylinder die Axialbewegung der Kolbenstange 16 auf eine sehr geringe Geschwindigkeit begrenzt.

In dem Pneumatikzylinder 26 befindet sich auf der Kolbenstange 16 ebenfalls ein Kolben 54. Der Kolben 54 sitzt am äußeren Ende des rechten Stangenabschnitts 48. Es ist erkennbar, daß die Spannrolle 10 gegen die Kette gedrückt wird, wenn der Kniehebel 14 mit Hilfe der Kolbenstange 16 entgegen der Uhrzeigerrichtung gedreht wird, die Kolbenstange 16 sich also nach rechts in der Zeichnung verschiebt. Daher wird in die Luftkammer, die sich innerhalb des Pneumatikzylinders 26 links von dem Kolben 54 befindet und die mit 56 bezeichnet ist, durch einen Einsatz 58 in der Trennwand 28 Druckluft eingelassen, wenn die Kette gespannt werden soll.

Wenn in dieser Luftkammer 56 ständig ein gewisser Luftdruck herrscht, drückt die Spannrolle 10 kontinuierlich gegen die Kette. Da die Luft komprimierbar ist, wirkt die Druckluft wie eine Spannfeder oder sonstige elastische Spanneinrichtung. Die Spannrolle kann zwar automatisch nachgeführt werden, jedoch ständig nur so schnell, wie es der Hydraulikzylinder 24 erlaubt, da die beiden Kolben 42 und 54 über die Kolbenstange 16 fest miteinander verbunden sind.

Das bedeutet, daß auch Rückstöße, die von der Kette auf die Spannrolle 10 des Kettenspanners ausgeübt werden, nicht zu einem vollständigen Zurückschlagen des Kettenspanners führen können. In der Trennwand 28 zwischen den Zylindern und dem linken Deckel 30 des Hydraulikzylinders befinden sich nicht im einzelnen bezeichnete Ein- und Auslässe für Hydrauliköl, die in der Zeichnung durch nicht bezeichnete Stopfen verschlossen sind. In dem rechts in der Zeichnung gezeigten Deckel ist im übrigen eine Entlüftungsöffnung 58 vorgesehen, die eine Entlüftung der rechten Luftkammer 60 des Pneumatikzylinders 36 bei der Verschiebung des Kolbens 54 ermöglicht.

Die erfindungsgemäße Spannvorrichtung kann nicht nur für Ketten, sondern auch für Riemen verwendet werden, und sie ist selbst darüber hinaus noch für andere Zwecke als Spannvorrichtung einzusetzen.

Da der erfindungsgemäße Kettenspanner mit seiner Doppelfunktion des Vorspannes und Haltens als eine zusammenhängende, kompakte Einheit ausgebildet ist, ist er leicht zu montieren und in vielen Ketten- oder Riementriebanordnungen konstruktiv ohne weiteres unterzubringen.

## Patentansprüche

1. Ketten- oder Riemenspanner mit einer durch einen elastischen Spannmechanismus gegen ein Trum einer Kette oder eines Riemens vorgespannten Spannrolle, wobei parallel zu dem elastischen Spannmechanismus (26, 54) ein Bremsmechanismus (24, 42) vorgesehen ist, der die Bewegung der Spannrolle (10) bremst,
der elastische Spannmechanismus (26, 54) durch einen Pneumatikzylinder (26) gebildet wird, dessen Kolben (54) durch Luftdruck in einer Luftkammer (56) vorgespannt ist und der über eine Kolbenstange (16) mit der Spannrolle verbunden ist und
der Bremsmechanismus einen Hydraulikzylinder (24) umfaßt, **dadurch gekennzeichnet, dass** sich in einem Kolben (42) des hydraulizylinders (24) eine Drosselbohrung (44) befindet und der Kolben (42) auf derselben Kolbenstange (16) wie der Kolben (54) des Luftzylinders (26) angeordnet ist.

2. Ketten- oder Riemenspanner nach Anspruch 1, **dadurch gekennzeichnet, daß** der Luftzylinder (26) und der Hydraulikzylinder (24) hintereinander beiderseits einer Trennwand (28) angeordnet sind und eine gemeinsame Kolbenstange (16) aufweisen.

3. Ketten- oder Riemenspanner nach Anspruch 2, **dadurch gekennzeichnet, daß** die beiden Zylinder an einem axialen Ende schwenkbar in einer gestellfesten Achse (36) gelagert sind und daß die Kolbenstange (16) am gegenüberliegenden Ende schwenkbar mit einem Kniehebel (14) verbunden ist, der die Spannrolle (10) trägt.

## Claims

1. Chain or belt tensioner comprising a tensioning roller pretensioned by an elastic tensioning mechanism against a part of a chain or belt, wherein parallel to the elastic tensioning mechanism (26, 54) a brake mechanism (24, 42) is provided for braking or decelerating the movement of the tensioning roller (10), wherein the elastic tensioning mechanism (26, 54) is built by a pneumatic cylinder (26) with a piston (54) pretensioned by compressed air in a chamber (56), wherein the pneumatic cylinder (26) is linked by a piston rod (16) with the tensioning roller and wherein the brake mechanism comprises a hydraulic cylinder (24), **characterized by** a throttle bore (44) located in a piston (42) of the hydraulic cylinder (24) and the piston (42) being located on the same piston rod (16) as the piston (54) of the pneumatic cylinder (26).

2. Chain or belt tensioner of claim 1, wherein the pneumatic cylinder (26) and the hydraulic cylinder (24) are located one behind another on both sides of a separating wall (28) and comprise a common piston rod (16).

3. Chain or belt tensioner of claim 2, wherein the two cylinders at one axial end are pivotally supported in an axle (36) fixed with respect to a support and wherein the piston rod (16) is at the opposite end pivotally supported by a toggle lever (14), wherein the toggle lever (14) supports or carries the tensioning roller (10).

## Revendications

1. Tendeur de courroie ou de chaîne, comportant une poulie de tension, précontrainte contre un brin d'une chaîne ou d'une courroie par un mécanisme de serrage élastique, un mécanisme de freinage (24, 42) pour freiner le mouvement de la poulie de tension (10) étant prévu parallèlement au mécanisme de serrage (26, 54) élastique, ledit mécanisme de serrage (26, 54) élastique étant formé par un vérin pneumatique (26), dont le piston (54) est précontraint par air comprimé dans une chambre d'air (56) et qui est relié à la poulie de tension par l'intermédiaire d'une tige de piston (16), et le mécanisme de freinage comprenant un vérin hydraulique (24), **caractérisé en ce qu'**une forure d'étranglement (44) est réalisée dans un piston (42) du vérin hydraulique (24), et le piston (42) est monté sur la même tige de piston (16) que le piston (54) du vérin pneumatique (26).

2. Tendeur de courroie ou de chaîne selon la revendication 1, **caractérisé en ce que** le vérin pneumatique (26) et le vérin hydraulique (24) sont disposés l'un derrière l'autre de part et d'autre d'une cloison (28) et comportent une tige de piston (16) commune.

3. Tendeur de courroie ou de chaîne selon la revendication 2, **caractérisé en ce que** les deux vérins sont montés pivotants par une extrémité axiale dans un axe (36) solidaire du bâti, et **en ce que** la tige de piston (16) est reliée de manière pivotante, au niveau de l'extrémité opposée, à un levier coudé (14) qui porte la poulie de tension (10).
